# EUROPEAN PATENT APPLICATION

(11) **EP 4 529 192 A1**
(43) Date of publication of application: **26.03.2025**
(21) Application number: 23888069.4
(22) Date of filing: 09.11.2023
(51) Int. Cl.: H04N 21/431

(54) **LIVE STREAMING PICTURE DISPLAY METHOD AND APPARATUS, ELECTRONIC DEVICE, AND STORAGE MEDIUM**

(30) Priority: 09.11.2022 CN 202211401293
(71) Applicant: Beijing Zitiao Network Technology Co., Ltd., Beijing 100190 (CN)
(72) Inventor: WANG, Xingyi, Beijing 100028 (CN); LI, Jiayi, Beijing 100028 (CN)
(74) Representative: Williams, Michael David
(86) International application number: PCT/CN2023/130643
(87) International publication number: WO 2024/099384

(57) **Abstract**

Embodiments of the present disclosure provide a live streaming image display method and apparatus, an electronic device, and a storage medium. The live streaming image display method comprises: in response to a display operation for the target media content, displaying the target media content in a media content display page, wherein the target media content is associated media content published by a preset user on the basis of target live streaming; and in response to a switching operation for the target live stream, displaying a playback page of the target live streaming, and displaying a live streaming picture of the target live streaming in the playback page.

## Description

This application claims priority to Chinese Patent Application No. 202211401293.5, filed on November 09, 2022, the content of which is hereby incorporated by reference in its entirety as part of this application.

### TECHNICAL FIELD

Embodiments of the present disclosure relate to a live stream image display method and apparatus, an electronic device, and a storage medium.

### BACKGROUND

At present, some application programs are able to support users to watch live stream and videos. However, the way of watching live stream and videos is single.

### SUMMARY

Embodiments of the present disclosure relate to a live stream image display method and apparatus, an electronic device, and a storage medium.

In a first aspect, an embodiment of the present disclosure provides a live stream image display method, including:
displaying target media content in a media content display interface in response to a display operation for the target media content, the target media content is associated media content posted by a predetermined user based on a target live stream; and
in response to a switch operation for the target live stream, displaying a play interface of the target live stream and displaying a live stream image of the target live stream in the play interface.

In a second aspect, an embodiment of the present disclosure provides a live stream image display apparatus, including:
a first display module configured to display target media content in a media content display interface in response to a display operation for the target media content, the target media content is associated media content posted by a predetermined user based on a target live stream; and
a second display module configured to, in response to a switch operation for the target live stream, display a play interface of the target live stream and display a live stream image of the target live stream in the play interface.

In a third aspect, an embodiment of the present disclosure provides an electronic device, including:
at least one processor; and
a memory communicatively connected to the at least one processor; wherein
the memory stores a computer program executable by the at least one processor, the computer program is executed by the at least one processor to enable the at least one processor to execute the live stream image display method of the embodiment of the present disclosure.

In a third aspect, an embodiment of the present disclosure provides a computer-readable storage medium, wherein the computer-readable storage medium stores computer instructions, and the computer instructions, when executed by a processor, implement the live stream image display method of the embodiment of the present disclosure.

### BRIEF DESCRIPTION OF DRAWINGS

The above and other features, advantages and aspects of embodiments of the present disclosure will become more apparent by referring to the following detailed description when taken in conjunction with the accompanying drawings. Throughout the drawings, the same or similar reference numerals indicate the same or similar elements. It should be understood that the drawings are schematic, and the component and elements are not necessarily drawn to scale.
Fig. 1 is a schematic flowchart of a live stream image display method according to an embodiment of the present disclosure;
Fig. 2 is a schematic diagram of displaying a media content display interface according to an embodiment of the present disclosure;
Fig. 3 is a schematic diagram of displaying a play interface according to an embodiment of the present disclosure;
Fig. 4 is a schematic diagram of displaying another play interface according to an embodiment of the present disclosure;
Fig. 5 is a schematic flowchart of another live stream image display method according to an embodiment of the present disclosure;
Fig. 6 is a structural block diagram of a live stream image display apparatus according to an embodiment of the present disclosure; and
Fig. 7 is a schematic structural diagram of an electronic device according to an embodiment of the present disclosure.

### DETAILED DESCRIPTION

Embodiments of the present disclosure will be described in more detail below with reference to the accompanying drawings. Although some embodiments of the present disclosure are shown in the accompanying drawings, it should be understood that the present disclosure can be embodied in various forms and should not be construed as limited to the embodiments set forth here, but rather, these embodiments are provided for a more thorough and complete understanding of the present disclosure. It should be understood that the accompanying drawings and embodiments of the present disclosure are only used for illustrative purposes, and are not configured to limit the protection scope of the present disclosure.

It should be understood that the steps described in the method implementations of the present disclosure may be performed in a different order and/or in parallel. Furthermore, method embodiments may include additional steps and/or omit performing the illustrated steps. The scope of the present disclosure is not limited in this respect.

As used herein, the term "including" and its variants are open-ended including, that is, "including but not limited to". The term "based on" is "at least partially based on". The term "one embodiment" means "at least one embodiment". The term "another embodiment" means "at least one other embodiment". The term "some embodiments" means "at least some embodiments". Related definitions of other terms will be given in the following description.

It should be noted that the concepts of "first" and "second" mentioned in this disclosure are only configured to distinguish different devices, modules or units, and are not configured to limit the order or interdependence of the functions performed by these devices, modules or units.

It should be noted that the modifications of "a" and "a plurality" mentioned in this disclosure are schematic rather than limiting, and those skilled in the art should understand that unless the context clearly indicates otherwise, they should be understood as "one or more".

The names of messages or information displayed in live stream images between a plurality of apparatuses in the embodiments of the present disclosure are used for illustrative purposes only and are not intended to limit the scope of those messages or information.

It can be understood that before using the technical solutions disclosed in respective embodiments of the present disclosure, the user should be informed of the type of personal information involved in the present disclosure, the scope of application, the use scenarios, etc., in accordance with the associated laws and regulations and obtain the user authorization in an appropriate manner.

For example, in response to receiving an active request from a user, a prompt message is sent to the user to explicitly prompt the user that the requested operation will require access to and use of the user's personal information. Thus, the user is allowed to independently choose whether or not to provide the personal information to software or hardware, such as an electronic device, an application program, a server, or a storage medium, that performs operations of the technical solutions of the present disclosure based on the prompt message.

As an optional but non-limiting implementation, in response to receiving the active request from the user, the manner of sending the prompt message to the user may be, for example, a pop-up window, in which the prompt message may be presented in the form of text. In addition, the pop-up window may contain an option control for the user to select "agree" or "disagree" to provide the personal information to the electronic device.

It can be understood that the above notification and user authorization process is only schematic and does not limit the implementation of the present disclosure, and other methods that satisfy the associated laws and regulations may also be used in the implementation of the present disclosure.

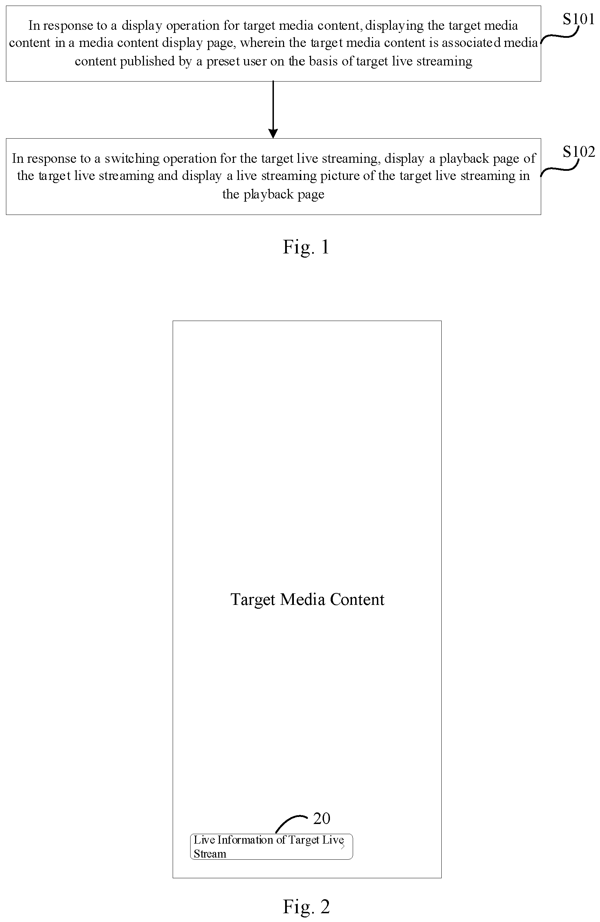

Fig. 1 is a schematic flowchart of a live stream image display method according to an embodiment of the present disclosure. The method may be performed by a live stream image display apparatus. The apparatus may be implemented by software and/or hardware and may be configured in an electronic device, e.g., may be configured in a cell phone or a tablet PC. The live stream image display method provided in the embodiment of the present disclosure is applicable to scenes of switching to watch live streams associated with media content when viewing the media content. As shown in Fig. 1, the live stream image display method provided in the embodiment may include the following steps.

S101: displaying target media content in a media content display interface in response to a display operation for the target media content, the target media content is associated media content posted by a predetermined user based on a target live stream.

In the embodiment, when the display operation for the target media content is received, the target media content may be displayed in the media content display interface, as shown in Fig. 2, for the current user to watch.

Herein, the display operation may be a triggering operation for indicating the display of certain media content, such as an operation of switching into the media content display interface or an operation of switching the media content currently displayed in the media content display interface. The media content display interface may be an interface for displaying the media content, such as a video play interface. Optionally, the media content display interface may be a interface other than the interface which the user switches to from a play interface of the target live stream. Exemplarily, the media content display interface may be a interface for displaying media content posted in a platform by a user of the platform, such as a interface for playing recommended media content in the platform or an interface for playing media content posted by a user followed by the current user.

The target media content may be considered as media content indicated to be displayed by the display operation. The target media content may be associated media content of the target live stream, such as associated media content posted by the predetermined user based on the target live stream. The target media content may be video content or image content, etc. The embodiment does not limit the type of the target media content.

The target live stream may be understood as a live stream associated with the target media content. Exemplarily, the target media content may be at least a partial clip or screenshot of the target live stream. The predetermined user may be considered as a user who posts the target media content. Optionally, the predetermined user is a user who watches the target live stream. Exemplarily, the predetermined user may post media content based on the target live stream when watching the target live stream. For example, the predetermined user may post media content associated with a live stream in the process of watching the live stream by a screenshot or screen recording function provided by a live stream play interface, and/or post media content by sharing the associated media content of the live stream provided by the platform. Exemplarily, the live stream interface may provide associated controls for posting the target media content, such as providing a screenshot control and a screen recording control. Optionally, posting the associated media content based on the target live stream includes: generating and posting the associated media content in response to a triggering operation on an associated control of the play interface of the target live stream by the predetermined user, the associated media content including at least part of a live stream image of the target live stream. The associated media content of the live stream provided by the platform may be a highlight clip of the live stream. For example, the platform may obtain a highlight clip of the live stream in real time during live stream of a live streamer and prompt a user who watches the live stream to share it, such as associating information of the highlight clip with a progress bar for displaying, or adding the obtained highlight clip to an associated media content list of the live stream for the user who watches the live stream to watch and share, and the like.

S102: in response to a switch operation for the target live stream, displaying a play interface of the target live stream and displaying a live stream image of the target live stream in the play interface.

Herein, the switch operation for the target live stream may be a triggering operation for indicating switching the currently displayed target media content to the target live stream associated with the target media content, which may be a triggering operation on the media content display interface, such as an operation for triggering a corresponding switch control in the media content display interface or a corresponding gesture operation executed in the media content display interface. The play interface of the target live stream may be an interface for displaying the live stream image of the target live stream. Exemplarily, the live stream interface may include a live stream interface for displaying a current live stream image of the target live stream and/or a video play interface for playing a playback video of the target live stream. The live stream image of the target live stream may be understood as an image of the target live stream, which may be a current live stream image of the target live stream or a live stream playback image of the target live stream. The switch control may be a control for performing the switch operation for the target live stream, which may remain displayed in the media content display interface in the process of displaying the target media content, or may be displayed in response to a corresponding triggering operation of the user.

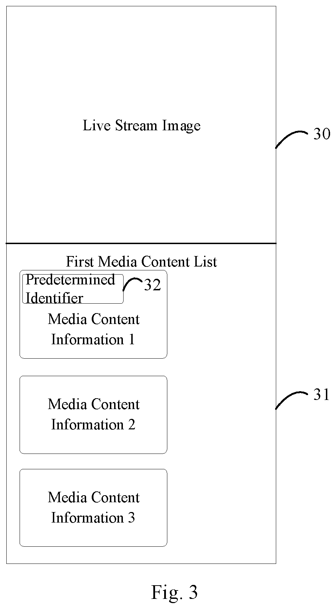

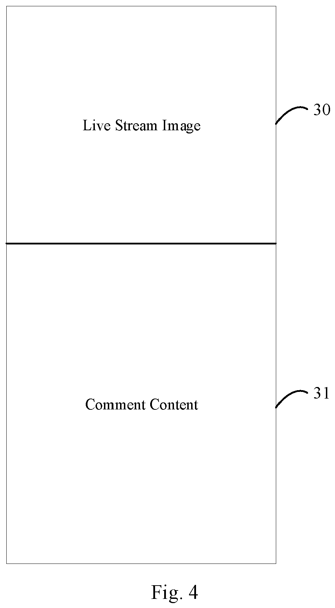

Specifically, when the switch operation for the target live stream is received, such as when it is detected that the user triggers the switch control displayed in the media content display interface, in response to the switch operation, the current interface may be switched from the media content display interface to the play interface of the target live stream and the live stream image of the target live stream may be displayed in the play interface, as shown in Figs. 3 and 4.

In the process of displaying the live stream image of the target live stream in the play interface, exemplarily, the live stream image of the target live stream may be displayed with a latest live progress of the target live stream at the current moment as a starting point, or the live stream image of the target live stream may be displayed with a starting point of the target media content/a live stream progress in the target live stream corresponding to the current display progress of the target media content as a starting point. The embodiment does not impose any limitation thereon.

In the embodiment, when the current user watches the media content posted by the predetermined user based on a certain live stream, the user may switch to the play interface of the live stream to watch the live stream through a simple switch operation, and does not need to determine whether there is an associated live stream or to find the associated live stream of the media content based on an image of the media content. This can enrich the ways of watching live streams, simplify the operation path of watching the live streams associated with the media content, and shorten the time for the user to switch to watch the live streams associated with the media content.

In some embodiments, displaying the live stream image of the target live stream in the play interface includes: displaying the live stream image of the target live stream in a first area of the play interface, and displaying a first media content list in a second area of the play interface, the first media content list is an associated media content list of the target live stream, and the first media content list contains media content information of the target media content.

In the above embodiments, the associated media content list of the target live stream in which the target media content is located may be further displayed while displaying a live stream image of the target live stream in the play interface of the target live stream, to further enrich the content displayed in the play interface and to bring convenience for the user to view the associated media content list in which the target media content is located.

Herein, the play interface of the target live stream may include a first area and a second area. The first area may be an area for displaying the live stream image of the target live stream, and the second area may be an area for displaying the associated media content list or communication content of the target live stream. There may or may not be an overlap area between the second area and the first area. Optionally, the second area may be in or outside the first area, e.g., the second area may be in the first area when the live stream image of the target live stream is displayed in full screen in the play interface, and may be outside the first area when the live stream image of the target live stream is displayed in non-full screen in the play interface. The following is an example in which the second area is outside the first area. A predetermined position may be a set position in the second area, such as a display position of first media content information in the second area or a middle position in the second area, which may be set specifically as needed.

The target live stream may have one or more associated media content lists. The associated media content list may be a list of media content information for displaying associated media content of the target live stream. The associated media content may include media content associated with the target live stream, such as a highlight clip of the target live stream; it may also include media content posted, based on the target live stream, by the user who watches the target live stream. The media content information may be considered as information of corresponding media content, such as the name and/or cover of the media content. The first media content may be an associated media content list containing media content information of the target media content, such as an associated media content list in which the target media content is located.

Specifically, when the switch operation for the target live stream is received, the play interface of the target live stream may be displayed, the live stream image of the target live stream may be displayed in a first area 30 of the play interface, and a first media content list of the target live stream may be displayed in a second area 31 of the play interface, as shown in Fig. 3.

When the first media content list is displayed in the second area, exemplarily, the first media content information in the first media content list may be displayed at the predetermined position in the second area, or, the media content information of the associated media content having a corresponding time node that is prior to the current live stream progress of the target live stream and closest to the current live stream progress may be displayed at the predetermined position in the second area.

Alternatively, as shown in Fig. 3 (in which the predetermined position is taken as an example of the display position of the first media content information in the second area), the media content information of the target media content may also be displayed at the predetermined position in the second area to bring convenience for the current user to quickly locate the media content information of the target media content. At this point, optionally, the media content information of the target media content is displayed at the predetermined position in the second area. The media content information of respective media content may be displayed in the order in which it is arranged in the first media content list.

In the above embodiments, as shown in Fig. 3 (in which media content information 1 is taken as an example of the media content information of the target media content), when the media content information of the target media content is displayed in the second area 31, the media content information of the target media content may have a predetermined identifier 32, and the predetermined identifier 32 indicates that the media content information is the media content information of the media content that the current user watches before switching to the play interface of the target live stream. Optionally, the media content information of the target media content has the predetermined identifier 32, the predetermined identifier 32 being used for indicating the target media content displayed before the switch operation is received. The embodiment does not impose limitation on the style of the predetermined identifier.

In the embodiment, the predetermined identifier may be further displayed when the media content information of the target media content is displayed in the associated media content list, and the predetermined identifier indicates the target media content last viewed by the user before switching to the play interface of the target live stream; or the predetermined identifier may be further displayed only when the target media content is in the associated media content list of the target live stream and the target media content is media content posted by an associated user of the current user, and the predetermined identifier indicates the target media content last viewed by the current user before switching to the play interface of the target live stream and posted by the associated user, which may be set specifically as needed.

In some embodiments, displaying a live stream image of the target live stream in the play interface includes: displaying the live stream image of the target live stream in a first area of the play interface and displaying a second media content list or communication content of the target live stream in a second area of the play interface.

In the above embodiments, when the live stream image of the target live stream is displayed in the play interface of the target live stream, a second media content list of the target live stream or communication content of the target live stream may be further displayed for easy viewing by the user.

Herein, the second media content list may be an associated media content list preset for the target live stream, which may or may not be the same as the first media content list, in other words, the second media content list may or may not contain the media content information of the target media content.

Specifically, when the switch operation for the target live stream is received, the play interface of the target live stream may be displayed, the live stream image of the target live stream may be displayed in the first area 30 of the play interface, and the second media content list or communication content of the target live stream, such as comment content may be displayed in the second area 31 of the play interface, as illustrated in Fig. 4 (in which displaying the comment content of the target live stream is taken as an example).

In the embodiment, it may be preset whether to prioritize the display of the first media content list, or to prioritize the display of the second media content list of the target live stream or the communication content of the target live stream when switching into the play interface of the target live stream.

In an optional embodiment, the first media content list may be displayed with priority. For example, when the switch operation for the target live stream is received, it may be determined whether the target media content is in an associated media content list of the target live stream, such as determining whether the target media content is media content posted by the predetermined user by way of sharing the associated media content of the target live stream provided by the platform, and if so, displaying the associated media content list in the second area of the play interface of the target live stream; and if not, displaying the second media content list or the communication content of the target live stream in the second area of the play interface of the target live stream.

The live stream image display method provided in the embodiment includes displaying target media content in a media content display interface in response to a display operation for the target media content, the target media content is associated media content posted by a predetermined user based on a target live stream; and in response to a switch operation for the target live stream, displaying a play interface of the target live stream and displaying a live stream image of the target live stream in the play interface. According to the above technical solution adopted in the embodiment, by switching the currently displayed media content into the live stream image of the associated live stream of the media content based on the switch operation of the user, the way of watching live streams can be enriched, the operation path of watching the live streams associated with the media content can be simplified and the time for the user to switch to watch the live streams associated with the media content can be shortened.

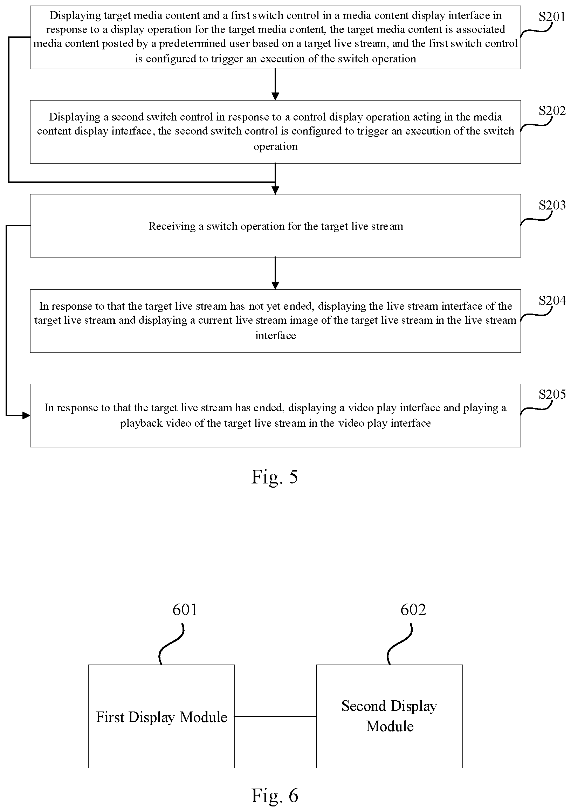

Fig. 5 is a schematic flowchart of another live stream image display method according to an embodiment of the present disclosure. The solution in the embodiment may be combined with one or more optional solutions in the above embodiments. Optionally, displaying the target media content in a media content display interface includes: displaying the target media content and a first switch control in the media content display interface, the first switch control is configured to trigger an execution of the switch operation.

Optionally, after displaying the target media content in the media content display interface, the method further includes: displaying a second switch control in response to a control display operation on the media content display interface, the second switch control is configured to trigger an execution of the switch operation.

Optionally, displaying the play interface of the target live stream and displaying the live stream image of the target live stream in the play interface includes: in response to that the target live stream has not yet ended, displaying the live stream interface of the target live stream and displaying a current live stream image of the target live stream in the live stream interface.

Optionally, the live stream image display method provided in the embodiment further includes: in response to that the target live stream has ended, displaying a video play interface and playing a playback video of the target live stream in the video play interface.

Accordingly, as shown in Fig. 5, the live stream image display method provided in the embodiment may include the following steps.

S201: displaying target media content and a first switch control in a media content display interface in response to a display operation for the target media content, and performing step S202 or S203. The target media content is associated media content posted by a predetermined user based on a target live stream, and the first switch control is configured to trigger an execution of the switch operation.

In the embodiment, in the process of displaying the media content associated with the live stream, the switch control may be further displayed to bring convenience for the current user to watch the live stream associated with the media content by triggering the switch control.

Specifically, when the display operation for the target media content is received, the target media content and the first switch control 20 may be displayed in the media content display interface in response to the display operation, as shown in Fig. 2.

Herein, the first switch control may be a control for triggering the execution of the switch operation for the target live stream. The first switch control may be displayed while the target media content is displayed. Exemplarily, the live stream information of the target live stream may or may not be displayed in the first switch control, which may include, for example, a live stream name and/or a live streamer nickname of the target live stream.

S202: displaying a second switch control in response to a control display operation on the media content display interface, the second switch control is configured to trigger an execution of the switch operation.

In the embodiment, when the control display operation from the current user is received, the switch control is displayed to indicate that the current user may watch the live stream associated with the media content by triggering the switch control.

Specifically, the second switch control may be displayed when the control display operation on the media content display interface is received. For example, when a click operation on a display area of the target media content is detected, the second switch control may be displayed and the display of the target media content may be further paused, such as pausing the play of the target media content.

Herein, the control display operation may be a triggering operation for indicating the display of the second switch control, such as a click operation on the display area of the target media content, a swipe operation on the media content display interface, or other gesture operations. The second switch control may be a control for triggering the execution of the switch operation for the target live stream, which may be displayed based on the control display operation from the user. The second switch control and the first switch control may be different switch controls.

S203: receiving a switch operation for the target live stream, and performing step S204 or S205.

In the embodiment, the current application program may receive the switch operation for the target live stream that is performed by the current user.

For example, the current application program may display the target media content and the first switch control in the media content display interface when receiving the display operation for the target media content. Accordingly, the current user may perform the switch operation for the target live stream by triggering the first switch control while viewing the target media content. Thus, the current application program may receive the switch operation performed by the current user.

As another example, the current user may perform the control display operation when viewing the target media content. In response to the control display operation, the current application program may display the second switch control in the media content display interface. Accordingly, the current user may trigger the second switch control to perform the switch operation for the target live stream. Thus, the current application program may receive the switch operation performed by the current user.

S204: in response to that the target live stream has not yet ended, displaying the live stream interface of the target live stream and displaying a current live stream image of the target live stream in the live stream interface.

Herein, the current live stream image may be considered as a live stream image of the target live stream at the current moment, i.e., a latest live stream image of the target live stream.

In the embodiment, when the switch operation for the target live stream is received, it may be determined whether the target live stream is ended or not. If the target live stream has not yet ended, the current interface may be switched from the media content display interface to the live stream interface of the target live stream, and the current live stream image of the target live stream may be displayed in the live stream interface. That is, a real-time live stream image of the target live stream is displayed with a live stream progress of the target live stream at the current moment as a display starting point so as to bring convenience for the current user to watch the latest live stream image of the target live stream.

S205: in response to that the target live stream has ended, displaying a video play interface and playing a playback video of the target live stream in the video play interface.

Herein, the playback video of the target live stream may be understood as a live stream playback video of the target live stream, which may be a complete playback video or a playback video clip of the target live stream.

In the embodiment, if the target live stream has ended when the switch operation for the target live stream is received, the playback video of the target live stream may be played. For example, the current interface is switched from the media content display interface to the video play interface of the playback video of the target live stream, and the playback video of the target live stream is played in the video play interface.

In the process of playing the playback video of the target live stream in the video play interface, the playback video of the target live stream may be played in a full-screen manner; the playback video of the target live stream may also be played in a non-full-screen manner. Then, an associated video list or communication content of the target live stream may be further displayed in the video play interface, for example, the playback video of the target live stream may be played in a first area of the video play interface, and the associated video list or communication content of the target live stream may be displayed in a second area of the video play interface.

In some embodiments, playing a playback video of the target live stream in the video play interface includes: playing a complete playback video of the target live stream in the video play interface; or playing a playback video clip of the target live stream in the video play interface, the playback video clip containing a video sub-clip corresponding to the target media content.

In the above embodiments, the playback video of the target live stream played when the target live stream has ended may be a complete playback video of the target live stream; or it may be a non-complete playback video of the target live stream, such as a playback video clip of the target live stream. The embodiment does not impose limitation thereon.

Herein, the complete playback video may be understood as a complete live stream playback video of the target live stream. The playback video clip may be a video clip of the live stream playback video of the target live stream. Exemplarily, the playback video clip may be a clip with exciting live stream content or high audience interaction, which may be generated by the platform. There may be one or more playback video clips for the target live stream, and each playback video clip may be composed of one or more consecutive segments of the playback video. When the playback video clip of the target live stream is played in response to the switch operation for the target live stream, what is displayed may be a playback video clip containing a video sup-clip corresponding to the target media content. The video sub-clip corresponding to the target media content may be understood as a video sub-clip corresponding to the target media content in the complete playback video of the target live stream.

Exemplarily, in the process of displaying the playback video of the target live stream in the video play interface, it may be determined whether the target media content is media content posted by the predetermined user by way of sharing the associated media content of the target live stream provided by the platform, and if so, the playback video clip of the target live stream that contains the video sub-clip corresponding to the target media content is displayed; if not, the complete playback video of the target live stream is displayed.

Alternatively, in the process of displaying the playback video of the target live stream in the video play interface, it may be determined whether there is a playback video clip of the target live stream that contains the video sub-clip corresponding to the target media content; if so, that playback video clip of the target live stream is displayed; if not, the complete playback video of the target live stream is displayed.

In the embodiment, in the process of displaying the playback video of the target live stream in the video play interface, the play starting point of the playback video may be flexibly set as needed. Optionally, playing a playback video of the target live stream in the video play interface includes: playing the playback video of the target live stream in the video play interface using a target time node as a play starting point, where the target time node includes a first time node, a second time node, or a third time node, the first time node corresponds to a starting point of the target media content, the second time node corresponds to a current display progress of the target media content, and the third time node includes a predetermined time node prior to the first time node or the second time node.

The target time node may be the play starting point of the playback video when the playback video of the target video is played in the video play interface in response to the switch operation for the target live stream. The target time node may include the first time node, the second time node, or the third time node.

Herein, the first time node may be considered as a time node corresponding to the starting point of the target media content in the playback video. The second time node may be considered as a time node corresponding to the current display progress of the target media content in the playback video. The current display progress may be understood as the display progress of the target media content when the switch operation for the target live stream is received. The third time node may be the predetermined time node in the playback video. The predetermined time node may be prior to the first time node/second time node, which may be a time node predetermined such as a highlight node; or it may be a time node determined based on the first time node/second time node, such as a time node prior to the first time node/second time node and having a preset time duration with the first time node/second time node.

In the above embodiments, the playback video of the target live stream may be played in the video play interface with the time node corresponding to the starting point or the current display progress of the target media content in the playback video of the target live stream as the play starting point; or it may be played in the playback video with a time node prior to the starting point of the target media content or the time node corresponding to the current display progress of the target media content in the playback video. The embodiment does not impose limitations thereon.

Exemplarily, different time nodes may be used as the play starting point of the playback video of the target live stream according to the type of the target media content. For example, if the target media content is video content, the playback video of the target live stream is played in the video play interface with a time node (i.e., the first time node or second time node) corresponding to the starting point or the current playback progress of the target media content in the playback video of the target live stream as the play starting point; if the target media content is picture content, then the playback video of the target live stream is played in the video play interface with a time node (i.e., the third time node) prior to the time node corresponding to the picture content in the playback video of the target live stream as the playback starting point.

The live stream image display method provided in the embodiment is able to further enrich the execution mode and response mode of the switch operation for the target live stream, and satisfy the user's need for displaying different live stream images and the user's need for watching different target live streams.

Fig. 6 is a structural block diagram of a live stream image display apparatus according to an embodiment of the present disclosure. The apparatus may be implemented by software and/or hardware and may be configured in an electronic device, e.g., may be configured in a cell phone or a tablet PC; and the apparatus may switch the display of live stream scenes associated with media content by executing the live stream image display method. As shown in Fig. 6, the live stream image display apparatus provided in the embodiment may include a first display module 601 and a second display module 602.

The first display module 601 is configured to display target media content in a media content display interface in response to a display operation for the target media content, the target media content is associated media content posted by a predetermined user based on a target live stream.

The second display module 602 is configured to, in response to a switch operation for the target live stream, display a play interface of the target live stream and display a live stream image of the target live stream in the play interface.

According to the live stream image display apparatus provided in the embodiment, by means of the first display module, the target media content is displayed in the media content display interface in response to the display operation for the target media content, the target media content is associated media content posted by the predetermined user based on the target live stream; and by means of the second display module, in response to the switch operation for the target live stream, the play interface of the target live stream is displayed and the live stream image of the target live stream is displayed in the play interface. According to the above technical solution adopted in the embodiment, by switching the currently displayed media content into the live stream image of the associated live stream of the media content based on the switch operation of the user, the way of watching live streams can be enriched, the operation path of watching the live streams associated with the media content can be simplified, and the time for the user to switch to watch the live streams associated with the media content can be shortened.

In the above solution, the first display module 601 may be configured to display the target media content and a first switch control in the media content display interface, the first switch control is configured to trigger an execution of the switch operation.

Furthermore, the live stream image display apparatus provided in the embodiment may further include a control display module configured to, after the target media content is displayed in the media content display interface, display a second switch control in response to a control display operation on the media content display interface, the second switch control is configured to trigger an execution of the switch operation.

In the above solution, the second display module 602 may be configured to display the live stream image of the target live stream in a first area of the play interface, and display a first media content list in a second area of the play interface, the first media content list being an associated media content list of the target live stream, and the first media content list containing media content information of the target media content; or display the live stream image of the target live stream in a first area of the play interface and displaying a second media content list or communication content of the target live stream in a second area of the play interface.

In the above solution, the media content information of the target media content may be displayed at a predetermined position in the second area and/or the media content information of the target media content has a predetermined identifier, the predetermined identifier being used for indicating the target media content displayed before the switch operation is received.

In the above solution, the second display module 602 may be configured to, in response to that the target live stream has not yet ended, display a play interface of the target live stream and display a current live stream image of the target live stream in the play interface.

Furthermore, the live stream image display apparatus provided in the embodiment may further include a video play module configured to, in response to that the target live stream has ended, display a video play interface and play a playback video of the target live stream in the video play interface.

In the above solution, the video play module may be configured to play a complete playback video of the target live stream in the video play interface; or play a playback video clip of the target live stream in the video play interface, the playback video clip containing a video sub-clip corresponding to the target media content.

In the above solution, the video play module may be configured to play the playback video of the target live stream in the video play interface using a target time node as a play starting point, where the target time node includes a first time node, a second time node, or a third time node, the first time node corresponds to a starting point of the target media content, the second time node corresponds to a current display progress of the target media content, and the third time node includes a predetermined time node before the first time node or the second time node.

In the above solution, the predetermined user may be a user who watches the target live stream, and posting the associated media content based on the target live stream includes: generating and posting the associated media content in response to a triggering operation on an associated control of the play interface of the target live stream by the predetermined user, the associated media content including at least part of the live stream image of the target live stream.

The live stream image display apparatus provided in the embodiment of the present disclosure may execute the live stream image display method provided in any embodiment of the present disclosure, and has the corresponding functional modules for executing the live stream image display method and beneficial effects. Technical details not exhaustively described in the embodiment may be found in the live stream image display method provided in any embodiment of the present disclosure.

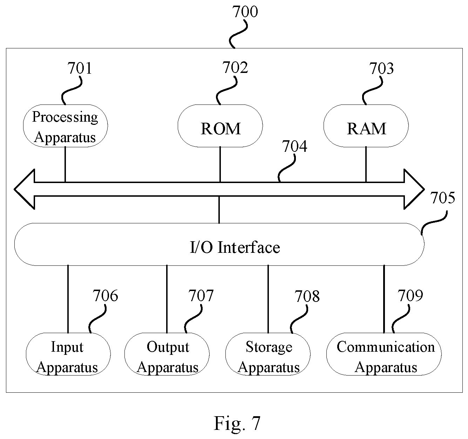

Referring to Fig. 7, Fig. 7 illustrates a schematic structural diagram of an electronic device 700 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in Fig. 7 is merely an example, and should not pose any limitation to the functions and the range of use of the embodiments of the present disclosure.

As illustrated in Fig. 7, the electronic device 700 may include a processing apparatus 701 (e.g., a central processing unit, a graphics processing unit, etc.), which can perform various suitable actions and processing according to a program stored in a read-only memory (ROM) 702 or a program loaded from a storage apparatus 708 into a random-access memory (RAM) 703. The RAM 703 further stores various programs and data required for operations of the electronic device 700. The processing apparatus 701, the ROM 702, and the RAM 703 are interconnected by means of a bus 704. An input/output (I/O) interface 705 is also connected to the bus 704.

Usually, the following apparatus may be connected to the I/O interface 705: an input apparatus 706 including, for example, a touch screen, a touch pad, a keyboard, a mouse, a camera, a microphone, an accelerometer, a gyroscope, or the like; an output apparatus 707 including, for example, a liquid crystal display (LCD), a loudspeaker, a vibrator, or the like; a storage apparatus 708 including, for example, a magnetic tape, a hard disk, or the like; and a communication apparatus 709. The communication apparatus 709 may allow the electronic device 700 to be in wireless or wired communication with other devices to exchange data. While Fig. 7 illustrates the electronic device 700 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 709 and installed, or may be installed from the storage apparatus 708, or may be installed from the ROM 702. When the computer program is executed by the processing apparatus 701, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is configured to: display target media content in a media content display interface in response to a display operation for the target media content, the target media content is associated media content posted by a predetermined user based on a target live stream; and in response to a switch operation for the target live stream, displaying a play interface of the target live stream and display a live stream image of the target live stream in the play interface

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances. For example, the first acquisition module can also be described as "a module for acquiring the time information of the target resource to-be-inserted in the target track".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, Example 1 provides a live stream image display method, including:
displaying target media content in a media content display interface in response to a display operation for the target media content, the target media content is associated media content posted by a predetermined user based on a target live stream; and
in response to a switch operation for the target live stream, displaying a play interface of the target live stream and displaying a live stream image of the target live stream in the play interface.

According to one or more embodiments of the present disclosure, Example 2 is based on the method described in Example 1, wherein displaying the target media content in a media content display interface includes:
displaying the target media content and a first switch control in the media content display interface, the first switch control is configured to trigger an execution of the switch operation n.

According to one or more embodiments of the present disclosure, Example 3 is based on the method described in Example 1, wherein after displaying the target media content in the media content display interface, the method further includes:
displaying a second switch control in response to a control display operation on the media content display interface, the second switch control is configured to trigger an execution of the switch operation.

According to one or more embodiments of the present disclosure, Example 4 is based on the method described in Example 1, wherein displaying the live stream image of the target live stream in the play interface includes:
displaying the live stream image of the target live stream in a first area of the play interface, and displaying a first media content list in a second area of the play interface, the first media content list is an associated media content list of the target live stream, and the first media content list contains media content information of the target media content; or
displaying the live stream image of the target live stream in a first area of the play interface and displaying a second media content list or communication content of the target live stream in a second area of the play interface.

According to one or more embodiments of the present disclosure, Example 5 is based on the method described in Example 4, wherein the media content information of the target media content is displayed at a predetermined position in the second area and/or the media content information of the target media content has a predetermined identifier, the predetermined identifier is used for indicating the target media content displayed before the switch operation is received.

According to one or more embodiments, Example 6 is based on the method described in any one of Examples 1 to 5, wherein displaying the play interface of the target live stream and displaying the live stream image of the target live stream in the play interface includes:
in response to that the target live stream has not yet ended, displaying the live stream interface of the target live stream and displaying a current live stream image of the target live stream in the live stream interface.

According to one or more embodiments, Example 7 is based on the method described in Example 6, wherein the method further includes:
in response to that the target live stream has ended, displaying a video play interface and playing a playback video of the target live stream in the video play interface.

According to one or more embodiments of the present disclosure, Example 8 is based on the method described in Example 7, wherein playing the playback video of the target live stream in the video play interface:
playing a complete playback video of the target live stream in the video play interface; or
playing a playback video clip of the target live stream in the video play interface, the playback video clip containing a video sub-clip corresponding to the target media content.

According to one or more embodiments of the present disclosure, Example 9 is based on the method described in Example 7, wherein playing the playback video of the target live stream in the video play interface includes:
playing the playback video of the target live stream in the video play interface with a target time node as a play starting point, wherein the target time node includes a first time node, a second time node, or a third time node, the first time node corresponds to a starting point of the target media content, the second time node corresponds to a current display progress of the target media content, and the third time node includes a predetermined time node before the first time node or the second time node.

According to one or more embodiments of the present disclosure, Example 10 is based on the method described in any one of Examples 1 to 5, wherein the predetermined user is a user who watches the target live stream, and posting the associated media content based on the target live stream includes:
generating and posting the associated media content in response to a triggering operation on an associated control of the play interface of the target live stream by the predetermined user, the associated media content includes at least part of the live stream image of the target live stream.

According to one or more embodiments of the present disclosure, Example 11 provides a live stream image display apparatus, including:
a first display module configured to display target media content in a media content display interface in response to a display operation for the target media content, the target media content is associated media content posted by a predetermined user based on a target live stream; and
a second display module configured to, in response to a switch operation for the target live stream, display a play interface of the target live stream and display a live stream image of the target live stream in the play interface.

According to one or more embodiments of the present disclosure, Example 12 provides an electronic device, including:
one or more processors; and
a memory for storing one or more programs;
wherein when the one or more programs are executed by the one or more processors, the one or more processors are caconfigured to implement the live stream image display method in any one of Examples 1 to 10.

According to one or more embodiments of the present disclosure, Example 13 provides a computer-readable storage medium, on which a computer program is stored, and when executed by a processor, the program implements the live stream image display method in any one of Examples 1 to 10.

The above description is only a preferred embodiment of the present disclosure and an explanation of the technical principles used. Those skilled in the art should understand that the scope of disclosure involved in the present disclosure is not limited to the technical solutions formed by the specific combination of the above technical features, but should also cover other technical solutions formed by any combination of the above technical features or their equivalent features without departing from the above disclosure concept. For example, the above features are replaced with (but not limited to) technical features with similar functions disclosed in the present disclosure.

In addition, although the operations are depicted in a specific order, this should not be understood as requiring these operations to be performed in the specific order shown or in a sequential order. In certain environments, multitasking and parallel processing may be advantageous. Similarly, although several specific implementation details are included in the above discussion, these should not be interpreted as limiting the scope of the present disclosure. Certain features described in the context of separate embodiments can also be implemented in a single embodiment in combination. Conversely, the various features described in the context of a single embodiment can also be implemented in multiple embodiments individually or in any suitable sub-combination.

Although the subject matter has been described in language specific to structural features and/or method logic actions, it is to be understood that the subject matter defined in the appended claims is not necessarily limited to the specific features or actions described above. On the contrary, the specific features and actions described above are merely example forms of implementing the claims. Regarding the apparatus in the above embodiment, the specific manner in which each module performs the operation has been described in detail in the embodiment related to the method, and will not be elaborated here.

## Claims

1. A live stream image display method, comprising:
displaying target media content in a media content display interface in response to a display operation for the target media content, the target media content is associated media content posted by a predetermined user based on a target live stream; and
in response to a switch operation for the target live stream, displaying a play interface of the target live stream and displaying a live stream image of the target live stream in the play interface.

2. The live stream image display method of claim 1, wherein displaying the target media content in the media content display interface comprises:
displaying the target media content and a first switch control in the media content display interface, the first switch control is configured to trigger an execution of the switch operation.

3. The live stream image display method of claim 1 or 2, wherein, after displaying the target media content in the media content display interface, the live stream image display method further comprises:
displaying a second switch control in response to a control display operation on the media content display interface, the second switch control is configured to trigger an execution of the switch operation.

4. The live stream image display method of any one of claims 1 to 3, wherein displaying the live stream image of the target live stream in the play interface comprises:
displaying the live stream image of the target live stream in a first area of the play interface, and
displaying a first media content list in a second area of the play interface, the first media content list is an associated media content list of the target live stream, and the first media content list contains media content information of the target media content; or
displaying the live stream image of the target live stream in a first area of the play interface and displaying a second media content list or communication content of the target live stream in a second area of the play interface.

5. The live stream image display method of claim 4, wherein the media content information of the target media content is displayed at a predetermined position in the second area and/or the media content information of the target media content has a predetermined identifier, the predetermined identifier is used for indicating the target media content displayed before the switch operation is received.

6. The live stream image display method of any one of claims 1 to 5, wherein displaying the play interface of the target live stream and displaying the live stream image of the target live stream in the play interface comprises:
in response to that the target live stream has not yet ended, displaying the live stream interface of the target live stream and displaying a current live stream image of the target live stream in the live stream interface.

7. The live stream image display method of any one of claims 1 to 5, wherein displaying the play interface of the target live stream and displaying the live stream image of the target live stream in the play interface comprises:
in response to that the target live stream has ended, displaying a video play interface and playing a playback video of the target live stream in the video play interface.

8. The live stream image display method of claim 7, wherein playing the playback video of the target live stream in the video play interface comprises:
playing a complete playback video of the target live stream in the video play interface; or
playing a playback video clip of the target live stream in the video play interface, the playback video clip contains a video sub-clip corresponding to the target media content.

9. The live stream image display method of claim 7, wherein playing the playback video of the target live stream in the video play interface comprises:
playing the playback video of the target live stream in the video play interface with a target time node as a play starting point, wherein the target time node comprises a first time node, a second time node, or a third time node, the first time node corresponds to a starting point of the target media content, the second time node corresponds to a current display progress of the target media content, and the third time node comprises a predetermined time node before the first time node or the second time node.

10. The live stream image display method of any one of claims 1 to 9, wherein the predetermined user is a user who watches the target live stream, and posting the associated media content based on the target live stream comprises:
generating and posting the associated media content in response to a triggering operation on an associated control of the play interface of the target live stream by the predetermined user, the associated media content comprises at least part of the live stream image of the target live stream.

11. A live stream image display apparatus, comprising:
a first display module configured to display target media content in a media content display interface in response to a display operation for the target media content, the target media content is associated media content posted by a predetermined user based on a target live stream; and
a second display module configured to, in response to a switch operation for the target live stream, display a play interface of the target live stream and display a live stream image of the target live stream in the play interface.

12. An electronic device, comprising:
at least one processor; and
a memory communicatively connected to the at least one processor; wherein
the memory stores a computer program executable by the at least one processor, the computer program is executed by the at least one processor to enable the at least one processor to execute the live stream image display method of any one of claims 1 to 10.

13. A computer-readable storage medium, wherein the computer-readable storage medium stores computer instructions, and the computer instructions, when executed by a processor, implement the live stream image display method of any one of claims 1 to 10.
